(19) Europäisches Patentamt
European Patent Office
Office européen des brevets

(11) **EP 2 630 609 B1**

(12) **FASCICULE DE BREVET EUROPEEN**

(45) Date de publication et mention de la délivrance du brevet:
**12.10.2016 Bulletin 2016/41**

(21) Numéro de dépôt: **11779746.4**

(22) Date de dépôt: **20.10.2011**

(51) Int Cl.:
***G06F 21/10*** *(2013.01)*

(86) Numéro de dépôt international:
**PCT/FR2011/000563**

(87) Numéro de publication internationale:
**WO 2012/052632 (26.04.2012 Gazette 2012/17)**

(54) **PROCÉDÉ DE DIFFUSION DE DOCUMENTS NUMÉRIQUES AUXQUELS SONT ATTACHÉS DES DROITS D'USAGE, SUPPORTANT LA COPIE MULTIPLE, L'ÉCHANGE ET MULTIPLATE-FORME**

VERFAHREN ZUR VERTEILUNG DIGITALER DOKUMENTE MIT ANGEHÄNGTEN BENUTZERRECHTEN ZUR UNTERSTÜTZUNG VON MEHRFACHKOPIEREN, AUSTAUSCH UND MEHREREN PLATTFORMEN

METHOD FOR DISTRIBUTING DIGITAL DOCUMENTS TO WHICH USER RIGHTS ARE ATTACHED, WHICH SUPPORT MULTIPLE COPYING, EXCHANGE, AND MULTIPLE PLATFORMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.10.2010 FR 1004104**

(43) Date de publication de la demande:
**28.08.2013 Bulletin 2013/35**

(73) Titulaire: **Pampagnin, Noël**
**94340 Joinville le Pont (FR)**

(72) Inventeur: **Pampagnin, Noël**
**94340 Joinville le Pont (FR)**

(74) Mandataire: **den Braber, Gerard Paul**
**PROXIP**
**Tour CIT**
**Bureau 717**
**3, rue de l'Arrivée**
**75749 Paris Cedex 15 (FR)**

(56) Documents cités:
**WO-A1-01/44908       WO-A2-2004/084020**
**WO-A2-2007/135281    FR-A1- 2 929 024**

- **Stephen Chapman: "The Javascript DOM", About.com , 17 février 2009 (2009-02-17), XP002639681, Extrait de l'Internet: URL:http://web.archive.org/web/20090217023 408/http://javascript.about.com/library/bl dom06.htm [extrait le 2011-05-30]**
- **Ashwin Kashyap: "AjaxCrypt", , 2 août 2010 (2010-08-02), pages 1-9, XP002668462, Extrait de l'Internet: URL:http://www.research.rutgers.edu/~ashwi nk/ajaxcrypt/index.html [extrait le 2012-12-31]**
- **Jennifer Kyrnin: "What is AJAX ?", About.com , 2 février 2009 (2009-02-02), XP002639682, Extrait de l'Internet: URL:http://web.archive.org/web/20090202035 346/http://webdesign.about.com/od/ajax/a/a a101705.htm? [extrait le 2011-05-30]**
- **Noel Pampagnin: "La technologie AdonSuite", , mai 2010 (2010-05), XP002639683, Extrait de l'Internet: URL:http://pampagnin.hd.free.fr/index.php? option=com_content&view=category&layout=bl og&id=37&Itemid=63 [extrait le 2011-05-30]**
- **Anonymous: "La lettre de FRANCINOV", Lettre d'information , no. 45 mai 2010 (2010-05), XP002639684, Extrait de l'Internet: URL:http://francinov.net/documents/lettre_ 45.pdf [extrait le 2011-05-30]**

## Description

La présente invention concerne un procédé de diffusion des documents numériques auquel sont attachés des droits d'usage.

Ce qu'on entend par droit d'usage est un droit qui donne notamment l'autorisation de copie, l'autorisation de consultation en totalité ou page par page en ce qui concerne les documents de type graphique et/ou caractères, de percevoir de courts extraits pour des documents sonores ou visuels, pendant une période donnée ou illimitée.

L'invention concerne un système mettant en oeuvre ledit procédé et un document de publication obtenu par ledit procédé.

## Domaine technique de l'invention.

L'invention concerne le domaine des procédés généraux de contrôle de la diffusion des contenus numériques, notamment les documents PDF, les livres numériques au format « epub », et les documents multimédias en vue d'empêcher les usages illicites, particulièrement ceux qui négligent les droits de propriété intellectuelle, lorsque les contenus sont diffusés par un réseau de télécommunication, ou par tout autre moyen comme les CDROM ou les clés USB.

Les éditeurs et les auteurs souhaitent valoriser leurs oeuvres en format numérique, parce que ce format est facile à produire et à reproduire, donc moins cher que le livre imprimé. Mais ils veulent se garantir contre les copies illégales, qui entament leur chiffre d'affaires. Des solutions existent, mais elles présentent l'inconvénient de bloquer l'utilisateur sur un terminal, voire trois terminaux avec l'autorisation du diffuseur. En dehors de cela, il n'a pas droit aux copies privées.

## Art antérieur.

Dans le document de brevet WO 2007/135281, est décrit un procédé général de sécurisation des ouvrages numériques permettant la copie privée illimitée, sur tout type de terminal satisfaisant des prérequis, consistant à inclure un dispositif de supervision dans le document numérique, ayant pour fonction d'autoriser l'accès au document en fonction des droits en cours pour le dit document, stockés dans une base externe accessible par réseau public ou privé. Chaque contenu délivré contient un identifiant unique, qui est recopié dans toutes les copies du dit contenu, cet identifiant unique donnant accès aux droits d'usage du contenu.

Dans le document de brevet FR 2929024 est décrite une bibliothèque en ligne qui diffuse des contenus de tous types, contrôlés quant à leur usage. Le procédé de contrôle est une amélioration du dispositif décrit dans la demande WO 2007/135281. Il est amélioré par le cryptage ou la dissimulation préalable du contenu à diffuser, ce contenu étant rendu visible et compréhensible grâce à un programme interne, seulement quand les droits en cours stockés dans la base externe le permettent. Un tel document contrôle son propre affichage dans les afficheurs programmables tels que les navigateurs (par exemple Internet Explorer, Mozilla Firefox, etc), ou autres (Acrobat Reader, runtimes Flash ou SilverLight).

Dans la demande de brevet en France n° FR 2 929 024, la distinction est faite entre les contenus « intelligents » qui peuvent contenir un dispositif de supervision tel qu'un programme ou des scripts, et les contenus « inertes » qui ne le peuvent pas, comme les images ou la musique. Dans ce dernier cas, les contenus inertes sont inclus dans un objet lui-même programmable.

Ces procédés, outre la copie privée illimitée et multiplateforme, ont l'avantage de permettre l'échange et d'être plus souples que les autres solutions. La souplesse porte sur le caractère dynamique (par exemple, en mode connecté on peut interdire la restitution d'ouvrages déjà diffusés à tout moment) et la variété des droits accordés aux documents : occurrence de lecture, date de fin, durée de consultation, attribution à une personne, à un établissement, diffusion fixe ou nomade., et, plus généralement, tout type de droit modélisable dans une base de droits numériques. Ces droits font partie de l'environnement général de l'ouvrage numérique, au même titre que les paramètres de gestion : prix de vente, copyright, date de publication, etc.

Ils sont aussi moins coûteux, car plus simples à produire et à publier, parce qu'ils s'appuient sur un modèle qui sépare le contenu des droits d'usage. Dans le modèle décrit dans la demande WO 2007/135281, spécialement destiné aux usages numériques, est défini un objet (au sens programmatique du terme) où la « licence » est externalisée dans une base externe accessible partout, partageable entre les différents exemplaires d'un ouvrage grâce à un identifiant unique, et accessible par chaque exemplaire grâce à un dispositif logiciel (le superviseur) intégré au dit exemplaire. Contrairement aux systèmes existants, le document publié est intangible quel que soit son usage. Seul, le script du serveur de contrôle vérifiant les droits et retournant un avis positif ou négatif au document selon les droits en cours, doit être adapté aux usages, le superviseur du document ne traitant que l'alternative : avis positif ou négatif. Le document « intelligent » est placé au centre du système de publication, et se régit lui-même par les propriétés qui lui sont attachées, évitant l'individualisation du document pour une personne donnée, caractérisée par un couple de clés d'une infrastructure à clé publique, mais généralisant l'individualisation à l'ensemble des contraintes.

Dans les systèmes existants, la publication commence par l'identification de l'acquéreur, et se poursuit par une chaîne de traitements aboutissant à un document chiffré pour cet unique propriétaire (document complètement individualisé pour ce client). Dans le système proposé, l'acquéreur figure comme propriété du document dans la base de droits, au même niveau que les autres contraintes.

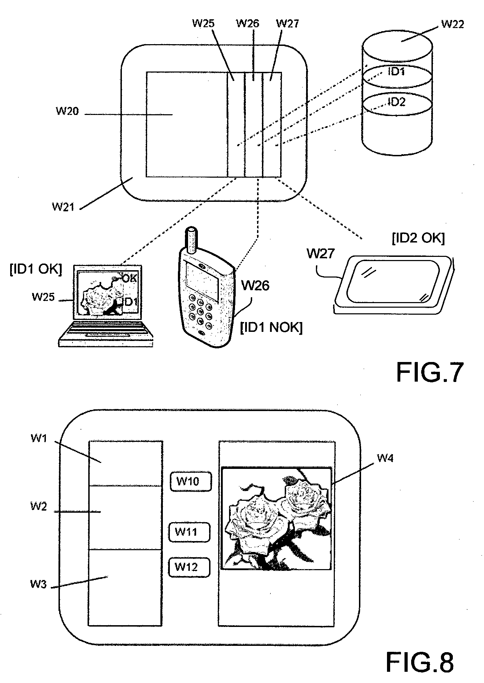

Il est alors possible d'éviter de produire un exemplaire pour chaque acquéreur, individualisé une fois pour toutes à la livraison, mais de construire l'exemplaire générique qui est le même pour toute demande, l'individualisation à la livraison portant sur toutes les contraintes et vérifiée par le script de contrôle exécuté sur le serveur de contrôle. En fait, on peut décrire le document numérique du modèle comme un contenu intelligent auquel sont associés des contextes d'exécution gérant, entre autres, les droits d'usage, et si on en tire toutes les conséquences, comme un objet programmatique réentrant, voir la figure 7, où trois utilisateurs W25, W26 et W27 munis respectivement d'un ordinateur, d'un téléphone et d'une tablette tactile, lisent ou veulent lire un même document générique. W25 et W26 partagent la même instance du document (ils ont le même identifiant ID1 et le même contexte dans la base de droits W22), W27 lit une instance différente référencée par ID2. Le programme de contrôle W20 exécuté sur le serveur de contrôle W21 gère les trois contextes. W25 et W26 sont contraints par un nombre maximum de consultations par jour. W25 a accès au document [ID1,OK]. Ce nombre étant dépassé, W26 ne peut accéder au document [ID1,NOK]. W27 ayant acquis indépendamment un droit de lecture de deux heures a accès au document [ID2, OK].

On évitera également le recours à l'infrastructure à clé publique (PKI) pour chiffrer les documents inertes relativement à un terminal donné, où le certificat contenant ladite clé privée est installé de façon sûre par le serveur de livraison, qui est cause de rigidité. Dans la présente demande, le chiffrement est réalisé avec une clé symétrique, relativement au document générique, par exemple en AES.

Ce procédé fonctionne connecté à une base de droits, et convient à tout type de consommation « numérique » sous contrainte, notamment la vente par téléchargement de contenus sous licence, la location, la location avec option d'achat, la consultation à la durée, le « pay-per-view », le feuilletage en ligne, la consultation d'ouvrages de référence, les notes d'entreprise en ligne, etc.

Le procédé autorise aussi la certification des sources par la signature, et le droit de retrait lorsqu'un document publié doit être retiré, par exemple par la mise à 0 du délai de consultation des exemplaires publiés.

Des besoins nouveaux se sont créés concernant la lecture des journaux, des livres, l'écoute musicale, la visualisation de films, pour lesquels un mode de consultation « déconnecté » ou « connecté partiel » est requis pour des documents de tous types.

### But de l'invention.

La présente demande propose des solutions qui vont satisfaire dans une large mesure ces besoins.

### Résumé de l'invention

La demande WO 2007/135281 décrit le modèle général pour un document numérique « intelligent » et indique comment le rendre multiplateforme, échangeable et insensible à la copie multiple. Le document de brevet français n° FR 2 929 024 décrit le système de publication et le cycle de vie de tels documents. Il décrit aussi les outils qui complètent le modèle pour les documents « inertes » (sans intelligence »), par l'inclusion dans des contenants programmables, ou par délégation à un contenant (ce que fait un document pdf contenu dans un navigateur). Il décrit aussi le moyen de consulter les ouvrages en mode déconnecté par la gestion d'un « ticket d'ouverture » reprenant les droits en cours et consultable quand la base de droits est inaccessible.

Afin d'isoler l'environnement de restitution des documents et le préserver des attaques de processus non autorisés, ceux-ci sont rendus dans une console de technologie adaptée aux applications s'exécutant dans les navigateurs ou sur le bureau (widget).

Les objets inertes qu'il contient ou qu'il référence (MP3, JPEG, FLV, etc.). sont chiffrés avec une clé console en AES ou équivalent, avec génération de la clé à partir d'un « hash » du contenu et d'un aléa selon les règles de l'art.

Le présent document décrit l'application du modèle aux usages actuels pour les principaux formats numériques et usages :

- Consultation en ligne temporaire, avec comme exemple un dispositif de « feuilletage » de livres numériques.

- Téléchargement d'ouvrages numériques, musique et vidéo, sauvegarde et restitution sur les terminaux récepteurs en modes connecté, connecté partiel, et déconnecté.

- Restitution d'oeuvres numériques embarquées.

- Téléchargement et sauvegarde de livres au format « epub », et restitution en modes connecté, connecté partiel, et déconnecté.

**Description détaillée de l'invention.**

La description suivante accompagnée des dessins ci-annexés, le tout donné à titre d'exemple non limitatif, fera bien comprendre comment l'invention peut être réalisée. Dans les dessins :

la figure 1 montre le système de l'invention,
la figure 2 explicite la structure du contenant,
la figure 3 montre un aperçu d'un lecteur multimédia engendré par un document s'affichant sur un terminal d'un client.
les figures 4 à 6 explicitent les processus mis en oeuvre dans l'invention.
La figure 7 expose la structure d'un document réentrant.
La figure 8 représente schématiquement une console selon le procédé.

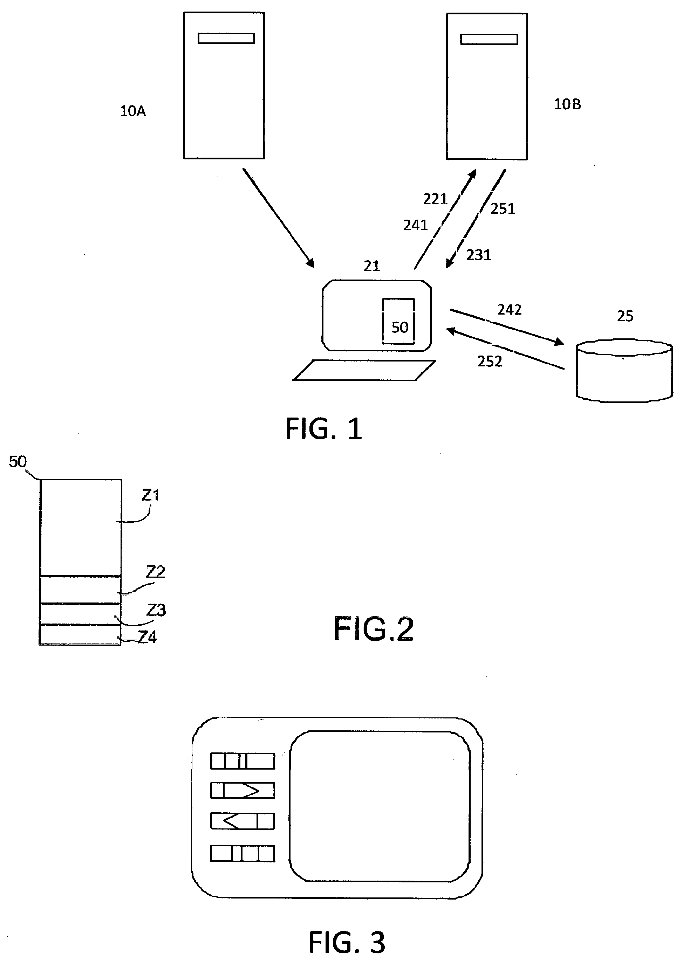

A la figure 1, on montre très schématiquement un système pour la diffusion d'un document numérique selon l'invention. Ce système fait intervenir un serveur 10 qui peut avoir plusieurs fonctions dont notamment une fonction « serveur de commande/ livraison » 10A qui a trait au traitement du document à diffuser et une fonction « serveur de contrôle » 10B qui gère les autorisations d'usage et la cohérence des différents codes d'identification et aussi un serveur de publication 10C. Les clients peuvent accéder à ce document en utilisant, par exemple un ordinateur 20, ou un terminal client et en empruntant les moyens de communications qu'offre le réseau Internet 15. D'autres ordinateurs référencés indistinctement par 50 peuvent aussi accéder au serveur 10.

D'autres exemples de réalisation de l'invention peuvent être obtenus en consultant la demande de brevet ci-dessus mentionné FR 2 929 024 qui contient l'application à une bibliothèque en ligne.

Les documents traités en vue d'une diffusion ont une structure 50 telle que montrée à la figure 2. Elle est formée de plusieurs zones et constitue un contenant pour le document numérique qui est disposé dans la zone Z1. La zone Z2 est relative aux codes actifs du genre script qui mettent en oeuvre des étapes du procédé de l'invention. La zone Z3 est affectée à un code d'identifiant unique affecté au document. La zone Z4 contient le nom de l'émetteur du document et aussi une signature de tout le contenant de sorte qu'une modification de ce dernier entraîne une invalidation de la signature ce qui permet de déceler une manoeuvre délictueuse.

La présente invention se base sur des procédés de l'art antérieurs précédemment cités, et auxquels l'invention propose des améliorations pour s'appliquer aux formats inertes inclus dans des pages programmables XHTML et dérivés, notamment le format EPUB du livre numérique.

L'invention s'applique aux objets multimédias inclus dans les pages XHTML. Il est possible de restituer les contenus, non seulement en mode connecté à la base de droits, mais encore en mode déconnecté partiel et en mode déconnecté total. Au final, l'invention présente un nouveau service de location de contenus avec option d'achat, le consommateur pouvant transformer ses droits de consultation limités dans le temps en droits permanents sur plusieurs machines de son choix.

L'invention profite de la disponibilité des technologies clientes des navigateurs WEB dans des applications qui s'exécutent sur le bureau de l'ordinateur du client 20, et qui disposent de droits étendus, comme l'accès au système de fichiers local (technologies des « widgets »).

Il est à noter qu'il est supposé que les serveurs de commande/livraison 10A, de contrôle 10B et de publication 10C sont étanches aux attaques de personnes non autorisées, qui ne peuvent pas atteindre les magasins des documents de référence, ni les bases de droit. On utilise, pour cela, les moyens de protection des serveurs conformes à l'état de l'art.

Les protections s'appuient en général sur le chiffrement des objets avec des « clés ». Par cela, il faut entendre dans ce document « système de cryptage générique » symétrique ayant recours à des clés (et/ou des passphrases), qui peuvent être générées par des méthodes diverses, adaptées aux objets et procédures à protéger (AES, MD5,SHA etc.). Puisque le document n'est pas attaché à une entité déclarée, il est possible de chiffrer les documents et les échanges en AES, à la place de RSA, ce qui permet d'éviter la rigidité, la lourdeur et le coût de la gestion des clés RSA. La seule clé RSA indispensable est celle qui authentifie le serveur de livraison du diffuseur lors de la signature des documents émis.

La présente description est un modèle général, reposant sur des technologies normalisées comme javascript et/ou propriétaires d'origines diverses comme AIR d'Adobe, Silverlight de Microsoft, HTML5, Opera widget d'Opera Software, etc. Chaque fois que possible, les explications seront données en javascript pour la clarté, mais les implémentations en solutions propriétaires sont plus larges et plus robustes, car les scripts javascript sont publics. De même les exemples de scripts serveur sont donnés en php parce que c'est un langage public accessible à tous, mais les solutions propriétaires équivalentes existent toujours.

Certaines fonctions externes appelées par le modèle ne sont pas décrites au-delà du service qu'elles rendent.

Ces fonctions sont du ressort de l'implémentation propriétaire.

D'autres fonctions de bas niveaux dans la pile des services manquent chez certains éditeurs, ou restent à développer. Elles seront indiquées comme telles dans la description.

**1- La console (fig.3)**

Pour assurer un contrôle des droits associés aux documents, qui résistent à une attaque de malfaiteurs quelque peu conséquents, il est judicieux de limiter les points d'attaque en effectuant la restitution des documents dans un cadre protégé. C'est l'objectif de la « console », dispositif logiciel, qui est construit selon les technologies des applications WEB, en dehors du WEB, les « widgets ».

La console est aussi une bibliothèque locale, qui a pour fonction de référencer les contenus acquis par un client, et de les présenter audit client. La sélection d'un document active la procédure de restitution. En outre, la console fournit les services de chiffrement-déchiffrement des échanges avec le serveur de contrôle.

La console est signée par le diffuseur; ses copies sont éventuellement connues et enregistrées par le serveur de contrôle, suite à une initialisation qui a lieu lors de l'installation du dispositif logiciel. Le dialogue initial de l'installation de la console sur un terminal commence par l'envoi au serveur de livraison de l'identité unique du dispositif logiciel de la console garantie par un tiers, l'éditeur du moteur d'exécution employé (le « runtime »). Il aboutit au renvoi par le serveur de livraison d'une chaîne de caractères, qui est l'identité unique de la console, que celle-ci stocke dans sa mémoire locale cryptée privée, ou dans un dispositif équivalent qui permet d'assurer la permanence et l'intégrité de l'identité du dispositif logiciel. A partir de son identité et de l'identifiant unique du dispositif logiciel, est générée la clé console requise par le chiffrement symétrique, selon les règles de l'art. En fin d'initialisation, cette clé console est enregistrée par le serveur de livraison avec l'identité de la console.

Lors des échanges avec le serveur, la console, dans une version de la présente invention, envoie son identité personnelle accompagnée par les paramètres voulus chiffrés en AES avec sa propre clé pour authentifier ses requêtes au serveur de contrôle, afin d'éviter les usurpations par des dispositifs logiciels parasites. Cette version est décrite par la suite. Dans une autre version, le superviseur du document vérifie l'authenticité de la console lors des requêtes au serveur de contrôle, par l'appel à la fonction propriétaire qui retourne l'identité unique de l'application.

**2 - Documents XML, images, sons et vidéos**

Dans la demande de brevet en France n° FR 2 929 024, il est décrit une façon d'appliquer le procédé général aux contenus non programmables délivrés par internet, inclus dans une page html d'un navigateur.

**3-1 Premier mode de réalisation, affichage d'images en ligne**

L'invention consiste selon un mode de réalisation, à inclure le contenu dans un contenant lui-même programmable comme un plugin Silverlight de Microsoft ou AIR d'Adobe, et au-delà de construire dynamiquement dans le plugin la propre console de restitution du contenu en fonction des droits en cours. Ce mode de réalisation aboutit, en ce qui concerne l'image, à construire dynamiquement l'afficheur qui restitue les pages du document, uniquement quand les droits le permettent. Ce mode est particulièrement adapté au feuilletage en ligne, et plus généralement à la consultation en ligne en temps limité. La figure 3 montre un lecteur multimédia généré dynamiquement. L'avantage du procédé est qu'il n'oblige pas l'acquéreur à télécharger une console de visualisation, car celle-ci est créée dynamiquement si les droits en cours le permettent.

Dans ce mode de réalisation consistant à feuilleter un document en ligne, les images des pages sont incluses dans un fichier zip; la représentation des images est séparée et consiste en dessins de calques (canvas), un calque par image, superposés et transparents, à l'exception de la page en cours de lecture. Les autres objets graphiques, tels que jauge, et boutons de déplacement sont ajoutés au calque principal dynamiquement par évaluation de scripts les représentant. Les images, les calques et autres objets graphiques sont téléchargés par le plugin inscrit dans la page XHTML, uniquement quand les droits en cours le permettent. Pour éviter que les images n'apparaissent en clair dans les buffers de réception, les images sont transformées par une matrice de masquage réversible. La matrice de déchiffrage est chiffrée avec la clé serveur et envoyée avec les images. Après le chargement des images, elle est renvoyée au serveur de contrôle par AJAX ou protocole équivalent, qui la déchiffre et la retourne en clair, ce qui démasque les images.

Un autre mode de réalisation concerne les contenus accessibles en mode « embarqué» sur support physique externe, disques, CDROM, clés USB, etc. : textes, images, musiques, vidéos, etc. et les contenus délivrés en continu sur protocole http. Ce mode consiste à inclure l'objet inerte, par exemple au format MP3, SWF, AVI, FLV (Flash Video d'Adobe), dans une page XHTML qui sert de modèle générique. L'objet peut être l'URL d'une source externe sur le réseau, ou être inclus dans un contenant avec la page HTML.

D'autres modes de l'invention appliquent le système décrit au format epub pour le livre numérique.

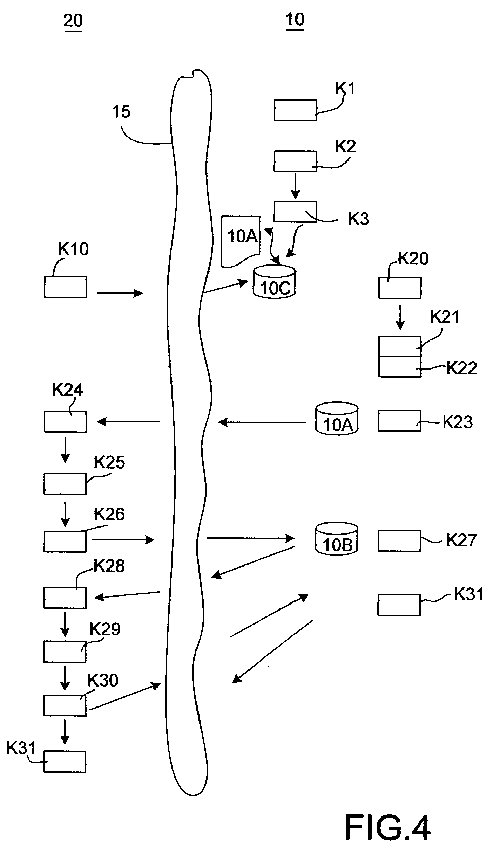

**3-2 Deuxième mode de réalisation : « contenus diffusés en continu» -FIG.4**

C'est le cas de la publication d'une page XHTML par la librairie en ligne de diffusion de documents sécurisés ; la librairie en ligne est décrite dans la demande de brevet en France n° FR 2 929 024.

Selon ce mode, le contenu est chargé dans le magasin des documents de référence de la librairie, puis paramétré avec les contraintes de consultation. En vue de la publication, ledit contenu est référencé dans une page XHTML écrite en langage de script, par exemple php, qui sert de modèle générique et contient des zones prévues pour recevoir des objets comme l'image, le son et la vidéo, plus le titre, des informations relatives aux droits de propriété intellectuelle et des commentaires autant que de besoin. Le son et la vidéo peuvent être restitués par l'appel à un lecteur flash inclus dans la page, ou un lecteur « mediaplayer », ou par l'appel à une autre application de restitution selon l'éditeur (voir Figure 3). Ceci constitue les processus montrés à la case K1 de la figure 4. Il y a une page modèle générique par type de contenu, par exemple une page contenant « application/x-shockwave-flash » pour flv.
La page contient aussi la clause destinée à recevoir par la suite en paramètre l'identifiant unique de la page.

$$\text{En php } \$idUnique = \$\_REQUEST[\text{« idUnique »}]$$

et des paramètres dynamiques comme l'identification du lecteur autorisé, pour laquelle on ajoutera :

$$\text{En php, } \$nom = \$\_REQUEST[\text{« nom »}]$$

et

$$\$mot\_de\_passe = \$\_REQUEST[\text{« mot\_de\_passe »}]$$

La notion d'identifiant unique est décrite dans la demande internationale WO 2007/135281. Dans un système ouvert, l'identifiant unique comprend l'identifiant unique de l'éditeur et l'identifiant unique attribué dans son domaine par l'éditeur.
La page contient encore le « superviseur » qui consiste en scripts javascript :

A- L'appel à la fonction decode dans la balise body <body onLoad= « decode(identifiant_unique) »>. On peut aussi affecter decode(identifiant_unique) à l'événement load de l'objet window. Dans ce cas, il n'y a pas lieu de modifier la balise <body>.
B- Le lien vers le script javascript externe control.js contenant, entre autres, la fonction decode et les fonctions de gestion du DOM (Document Object Model) : <script src='control.js' type= 'text/javascript'></script>
C- Une zone prévue pour recevoir la référence au contenu, par exemple l'attribut source « nom du contenu »

La page modèle est ensuite recopiée, renommée (case K2). Si le contenu FLV est le « Chant du Départ », la page recopiée s'appelle « Chant_du_Départ.php ». Les zones de paramétrage sont renseignées.

Puis, le serveur de livraison génère la clé serveur avec laquelle il chiffre Chant_du_Départ.php (K21), par exemple en réalisant un « hash » du <body>, puis en utilisant ce résultat plus une graine aléatoire pour chiffrer le contenu de chaque paragraphe <p> et éventuellement le « digest » du paragraphe. Il encode le tout en base64 . Il peut encore le chiffrer une deuxième fois au niveau du <body>. L'algorithme de chiffrement est au choix du serveur de livraison, la clé serveur est stockée dans le serveur de contrôle avec les autres paramètres dudit document (K22).

L'objet inerte est aussi chiffré en AES ou autre clé symétrique avec la clé de contenu, générée par le serveur de livraison à partir d'un aléa et d'un « hash » du contenu, et stockée sur le serveur de contrôle avec les autres paramètres et contraintes du document. A partir du modèle générique, on obtient donc une page « Chant_du_Départ.php », dotée d'un superviseur javascript, chiffrée, contenant une référence au contenu Chant du Départ.flv, prête à recevoir son contexte d'exécution quand un acquéreur la commandera.

Puis, la page est publiée (K3), c'est-à-dire qu'elle est enregistrée dans le magasin des documents de référence du serveur de livraison 10A, où elle apparaît au public référencée par l'URL de type : https://serveur/accueil.php?titre=Chant-du-Départ.php Chant du Départ est alors prêt pour la diffusion.

*3-1 Restitution d'une page XHTML préalablement publiée par la librairie en ligne de diffusion de documents sécurisés.*

L'URL https://serveur/accueil.php?titre=Chant-du-Départ.php est insérable dans toute page html, notamment dans les pages d'un serveur web de commande/livraison 10A figure 4.

Pour obtenir un document, le client sélectionne l'URL affiché par la liste W1 de la console (bouton W10 figure 8 schéma de la console) (case K10).

le lien est activé; le script php crée :

D- un environnement de livraison destiné au traitement backoffice des commandes (paiement, gestion des stocks, statistiques, etc.),

E- dans la base de droits du serveur de contrôle, un environnement contenant toutes les informations relatives au contenu Chant_du_Départ à délivrer : titre, nom du fichier (Chant_du_Départ.php), contraintes de publication, jeton, clés, compteurs et autres informations dynamiques de contrôle. Cet environnement est référencé par un identifiant unique (K20).

Et le script php crée le lien vers l'environnement de cette instance :
https://serveur/Chant_du_Depart.php?p1=(identifiant_unique&p2=param_control), où param_control, contient les paramètres de contrôle ( par exemple un jeton, le nom du fichier, etc.); l'ensemble est chiffré avec la clé serveur (K23). Le lien est inscrit dans la liste W2 de la console. La licence externe est inscrite dans la zone W3.

Les étapes (K24) à (K31) suivantes sont répétées à chaque demande de restitution du contenu.

Le lien sélectionné de la liste W2 (K24) par le bouton W12 est signé par la console avec sa clé (K25). Il devient https://serveur/Chant_du_Depart.php?p1=identifiant_console&p2=chiffre((identifiant_un ique&p2=param_control), clé_console ),

Le lien est activé (K26).

Puis le script Chant_du_Départ.php :

F- déchiffre les paramètres de contrôle avec la clé console puis la clé serveur. En cas de divergence entre les paramètres stockés et les paramètres déchiffrés, il est présumé une fraude et la requête est abandonnée

G- il demande des informations supplémentaires si besoin est (*voir Affectation d'un document à une personne dûment identifiée).*

H- Il construit la page html, instance de Chant_du_Départ.php référencée par l'identifiant unique, et la délivre à la console W4 (K28). A réception de l'événement « load » (K29), la fonction decode(identifiant_unique) est appelée (case K30). Elle vérifie les droits en cours pour l'identifiant unique par requête AJAX ou protocole équivalent de type https://serveur/control.php?p1=identifiant_unique, control.php

I- met à jour les compteurs, dates, et autres données de contrôle.

J- retourne à la console un ticket d'ouverture au format XML, signé par le serveur de contrôle, qui est une autorisation de restitution du document, ou un refus selon les droits en cours, tel que défini dans la demande de brevet en France n° FR 2 929 024. Ce ticket contient au moins l'identifiant unique du document, la date et l'heure, la validité, la durée de validité, et des paramètres complémentaires comme les droits en cours, encore appelés licence locale..

La case K28 indique que le ticket d'ouverture est chargé dans la mémoire locale cryptée de la console (en langage propriétaire).

La case K29 indique que selon la validité du ticket d'ouverture, l'instance Chant_du_Départ.php?p1=identifiant_unique peut être déchiffrée.

La fonction dechiffre() effectue le déchiffrement de la page XHTML de la façon suivante. La case (K30) indique qu'il n'y a pas de déchiffrement local, mais qu'on envoie successivement chaque contenu de paragraphe <p> obtenu par la propriété innerHTML au script convert.php exécuté sur le serveur de contrôle, par AJAX ou autre protocole équivalent en session sécurisée, qui effectue le déchiffrement de ces paragraphes avec la clé serveur stockée sur le serveur de contrôle avec les autres paramètres dudit document (K31), et les renvoie en clair audit document. Le contenu de chaque paragraphe <p> obtenu par la propriété innerHTML est alors remplacé par le contenu déchiffré. Ces fonctions utilisent l'API (Application Programming Interface) du DOM (Document Object Model) pour obtenir tous les contenus de l'ensemble des paragraphes, et les remplacer par leur valeur en clair. Chaque contenu <p> est accompagné de l'identifiant unique de l'instance du document aux fins de contrôle de session (voir ci-dessous).

Exemple basique de déchiffrage d'un document XHTML en javascript, selon les principes énoncés :

```
function dechiffreElement(document, xhr1, ident) { // xhr1 : XMLHttpRequest
 // ident : identifiant unique
      var v = document.getElementsByTagName('p');
```

```
for (var i=0; i <v.length; i++) {
   if(v[i].hasChildNodes()) {
      var str = v[i].innerHTML; // str est le contenu d'un paragraphe p
   xhr1_object.open('POST', 'convertp.php', false); // appel de la fonction distante de
déchiffrage
   xhr1_object.setRequestHeader('Content-Type', 'application/x-www-form-urlencoded');
      xhr1_object.send('p1=' + ident + '&chaine=' + str);
      if(xhr1_object.readyState = 4 && xhr1_object.status = 200) var strret =
xhr1_object.responseText;
      v[i].innerHTML=strret;
         } } // for
      }
```

Cette chaine de traitement démasque le texte de la page et l'appel à la source de l'objet mpeg, mp3, jpeg, etc. et doit être complétée par le déchiffrement de l'objet. Pour cela, une clé de contenu est employée pour déchiffrer en mémoire et « à la volée » les fragments successifs reçus. Cette clé de contenu a été préalablement générée pour le dit document (voir paragraphe antérieur), stockée dans son contexte d'exécution avec les autres paramètres et contraintes, et transmis à la console chiffrée par la clé serveur avec le document.

Dans le serveur de contrôle, pour éviter les détournements, il est important de s'assurer au moment du déchiffrement que les requêtes viennent bien de demandes internes, et que les autorisations sont toujours en vigueur pendant toute la phase de déchiffrement.

Pour s'assurer que les autorisations sont toujours en vigueur pendant le déchiffrement, une solution consiste à encadrer les opérations comprises entre l'identification du document et la fin du déchiffrement du dit document par une session serveur affectée à l'identifiant unique, par exemple en php : tant qu'est vrai

```
($_SESSION['identifiant_unique'] == identifiant_unique_courant),
 $_SESSION['identifiant_unique'] étant initialisé par la fonction d'initialisation
 decode(identifiant_unique), et détruit à la fin du déchiffrement.
```

Il existe d'autres solutions de la responsabilité du serveur de contrôle, qui sont connues et ne font pas partie de la présente demande.

Le lien chiffré reçu à l'étape (K24) est échangeable et multipliable sur tout type de plate-forme supportant les prérequis dans la console spécialisée.

*Affectation d'un document à une personne dûment identifiée*

Le document peut avoir comme contrainte de ne pouvoir être lu que par une personne dûment identifiée/authentifiée. Par exemple, la contrainte est représentée par les nom et mot de passe d'une personne figurant dans l'enregistrement de contrôle d'un document. Dans ce cas, le dit document doit obtenir les informations d'identification. Dans un mode de réalisation parmi d'autres, le document exige la saisie des informations d'identification/authentification par un formulaire demandant un nom et un mot de passe. Pour ce faire, une méthode consiste à inclure dans le <body> de la page modèle un calque invisible, par

```
<body><div id= «main» style = «display :none »>tout_le_body</div></body>
```

et la page modèle est complétée avec un autre calque invisible contenant le formulaire de saisie des informations d'identification

```
<div id= «ident » style = «display :none »> formulaire de saisie </div>.
```

A l'étape G décrite ci-dessus, le document présente le formulaire de saisie si une identification est requise et si les droits en cours sont valides, en rendant visible le calque qui contient le formulaire de saisie (display :block). Les valeurs des champs du formulaire d'identification, par exemple nom et mot de passe, sont saisis puis retournés à Chant_du_Départ.php par la fonction javascript :ident(nom, motPasse), associée au bouton de validation du formulaire, qui les envoie par AJAX au serveur de contrôle où ils sont vérifiés. Tant que l'identification n'est pas réalisée, le formulaire est représenté. Quand l'identification est satisfaite, le résultat est retourné et récupéré en javascript ou langage propriétaire par le document, qui rend invisible le calque de saisie (display :none), tandis que le calque principal « main » est rendu visible et déchiffré.

Exemple de code en javascript remplissant la fonction visible/invisible :

```
var ident = document.getElementById('ident');
    ident.style.display='none';
var main =document.getElementById('main');
    main. style. display='block';
```

Puis passage à l'étape I.

La procédure d'identification/authentification peut être rendue aussi complexe et sévère que l'on veut. On voit que le procédé permet d'attribuer simplement un contenu à une personne de façon très robuste.

Une autre méthode consiste à ce que le superviseur du document construise dynamiquement le dit formulaire XHTML, et lui associe la fonction de vérification de la saisie à l'étape G (case K21).

Ce procédé est applicable à toute contrainte requérant une saisie complémentaire de données lors de l'appel du document.

Les échanges doivent se faire à l'intérieur d'une session attachée à l'instance du document, de type https sécurisée.

**4- Troisième mode de réalisation : « Format epub » :**

C'est un format packagé rassemblant les contenus, leurs structures, leurs présentations, et les informations complémentaires pour l'édition. Les pages qui contiennent des textes, des images, des objets multimédias, des liens hypertextes, et les structures sont au format XML représenté en mémoire par un arbre DOM (Document Object Model) dans l'environnement des navigateurs.

Afin de mieux contrôler les documents, les contenus sont restitués dans l'environnement privé de la console, un « widget », soit dans un moteur d'exécution sur le bureau (Adobe, Microsoft), soit dans un moteur d'exécution du navigateur (Opera wigdet manager pour terminaux mobiles).

La portabilité de ces widgets dépend de la portabilité des moteurs d'exécution sur lesquels elles s'appuient, et peut-être très large.

Pour publier un document au format epub contrôlé, suivre les étapes suivantes déjà vues dans les modes de réalisation 2 et 3 :

Pour un document commandé par un lecteur, créer d'abord l'enregistrement de contrôle dans la base externe fixant les droits d'usage relatifs à la dite instance. Stocker l'identifiant unique avec l'enregistrement de contrôle.

Dézipper le paquet epub, et chiffrer chaque page xml qu'il contient (en général une page par chapitre), c'est-à-dire en chiffrer les éléments essentiels, comme par exemple tous les contenus des paragraphes entre les balises <p> et </p>. On peut aussi chiffrer la totalité du contenu de la balise <body>. Coder les contenus cryptés en base64. La clé de chiffrement est enregistrée dans la base de droits, avec les autres informations de contrôle du contenu numérique, comme la date de péremption, ou la fréquence de lecture autorisée quotidienne. Les images et autres contenus inertes sont chiffrés séparément avec une deuxième clé, la clé de contenu obtenue comme dans le mode 2;

Récupérer l'identifiant unique de cet enregistrement et l'inscrire en clair dans les metadatas du document epub avec les paramètres de contrôle sous forme cryptée à l'aide de la clé serveur. Stocker aussi la requête d'identification, pour que le document soit identifié par le serveur de contrôle., par exemple dans <dc:creator opf:role='oth' https://serveur/ident.php?p1=identifiant_unique&p2=param controle ident.php recevant l'identifiant unique et les paramètres de contrôle rechiffrés avec la clé console obtenue par le processus d'installation du dispositif logiciel.

Rezipper les fichiers modifiés et stocker sur le serveur de livraison le document sous cette forme illisible.

Signer le document packagé zippé.

Livrer au client le document packagé sous cette forme par téléchargement.

Le client enregistre le document sous cette forme dans son système de fichier local. Le document est illisible sous cette forme.

Le client qui reçoit le document peut le lire uniquement dans un «lecteur» de technologie widget qui a le droit d'effectuer des entrées/sorties dans le système de fichier local. (Voir figure 8). Ce lecteur prend la forme d'une console qui présente les documents EPUB accessibles (W1). Par le bouton W10, le client enregistre les instances des documents achetés, et les présente sous forme de liste (W2). Les droits relatifs aux instances apparaissent dans la zone W3.

Par le bouton W12, le client demande à lire un ouvrage sélectionné dans W2. La simple ouverture du document EPUB depuis la console déclenche une séquence d'actions pour retrouver le fichier d'entrée du document epub dans le zip, « container.xml » logé dans le répertoire META-INF , puis le fichier opf qui contient la structure du document et la séquence des pages, et effectue le chargement des metadatas au format XML.

C'est suite au chargement des metadatas que la procédure d'identification/autorisation de lecture est retrouvée et déclenchée, et envoie au serveur de contrôle par AJAX (ou autre protocole équivalent) une requête contenant l'identifiant unique, stockée dans les metadatas. https://serveur/ident.php?p1=identifiant_console&p2=chiffre((identifiant_unique&p2=par am_control), cle_console)

Si le script ident.php ne reconnaît pas les paramètres de contrôle (les paramètres déchiffrés doivent être identiques aux paramètres stockés), l'identité de la console est usurpée et le script ne retourne rien à la console. Dans le cas contraire, il vérifie les droits en cours pour l'identifiant unique.

Le serveur de contrôle vérifie l'origine de la requête par le recalcul des paramètres de contrôle, et retourne le ticket d'ouverture. Si l'autorisation est accordée, les paragraphes au format XML sont chargés un par un dans la console de visualisation. Le déchiffrement de chaque page se déclenche à la réception de l'événement «load » de chaque page XML (généralement un chapitre). Les contenus obtenus par la propriété innerHtml de chaque élément p (ou body) de la page chargée sont envoyés par requête distante au serveur de contrôle qui les retourne en clair si les droits en cours pour le dit document le permettent. Ces éléments devenus clairs remplacent les éléments cryptés.

Les contenus image et vidéo, quand ils existent, sont traités comme dans la description 3. La liaison entre le document et le serveur de contrôle doit être une session sécurisée de type https, pour s'assurer de l'identité du serveur et conserver la confidentialité des échanges.

**5- Mode connecté partiel.**

Suite à la requête d'identification/autorisation contenue dans le document sécurisé émise par la console, celle-ci enregistre la réponse du serveur de contrôle : le « ticket d'ouverture » contenant les droits en cours relatifs au dit document (voir la demande de brevet en France n° FR 2 929 024) comprenant l'identifiant unique, les paramètres de contrôle de la publication, la durée de validité du ticket, la date et l'heure, dans la mémoire locale cryptée permanente attribuée à chaque widget. Ce ticket d'ouverture prend la forme d'une chaine XML qui est évaluée par la console sur le terminal, produisant un objet attaché au contenu sécurisé.

Le ticket est stocké dans la mémoire locale cryptée permanente du terminal. On ajoute encore au ticket un compteur de temps, initialisé par la durée de validité, et décrémenté périodiquement par une fonction appelée par un timer. Peu de temps avant que le compteur ne devienne nul, la console peut avertir l'utilisateur, afin qu'il prolonge ou pas sa session déconnectée.

La console enregistre également tous les éléments <p> à mesure qu'ils sont déchiffrés dans la mémoire de masse permanente cryptée associée à la console. L'ensemble de ces éléments constitue le cache crypté du document epub. Ces éléments ne sont donc clairs que le temps de l'affichage. le chiffrement AES (ou autre système de chiffrement symétrique) des éléments <p> se fait avec une clé propre à chaque console sur un terminal donné (un aléa + identité unique de la console).

La technologie des widgets utilisée par la console a cette particularité que la mémoire locale attribuée à la console ne peut être écrite, lue et relue que par la console, application logicielle dûment signée, et n'est pas accessible par tout autre programme.

Par la suite, si le terminal est déconnecté du réseau et que le document ne peut pas vérifier les droits en cours dans la base externe, le dit document ira chercher l'information dans la mémoire cryptée locale (le ticket d'ouverture), et, si les droits constituant la licence « connecté partiel » figurant dans le ticket d'ouverture le permettent, restituera en clair le document, grâce aux paragraphes <p> stockés dans la mémoire de masse permanente cryptée, qui constituent le cache crypté.

Pour éviter que le document ne soit lu sur un nombre incontrôlé de terminaux, il est judicieux de contraindre le document par une occurrence de consultation par jour faible, par exemple 2 ou 3. Dans ce cas précis, il ne pourra y avoir que 2 ou 3 consoles susceptibles de restituer le document, pour un mode déconnecté partiel quotidien.

Eu égard à la possibilité qu'a le lecteur de modifier la date et l'heure sur les PC, il est préférable de se fier à la durée écoulée plutôt qu'aux dates.

**6- Mode déconnecté.**

Le système de publication est orienté pour faciliter la consultation d'un grand nombre d'ouvrages numériques de tous types, et de toutes provenances, sans acquérir de licence définitive.

Néanmoins, certains clients voudront acquérir le droit définitif de consulter un document. Pour ce faire, si le diffuseur l'autorise sur un nombre de terminaux fixé comme paramètre du document, stocké sur le serveur de contrôle avec les autres paramètres, on appliquera la procédure suivante au mode connecté partiel :

A tout moment de la période de consultation prévue, le client peut faire une requête d'attribution définitive du droit de consultation au serveur de contrôle depuis la console. Le serveur de contrôle lui envoie en réponse un ticket d'ouverture définitif, comportant la licence définitive, dont un délai infini, par exemple en remplissant le délai avec 99999999, et soustrait 1 au nombre de terminaux supportant une autorisation définitive, qui n'est autre que le nombre de consultations quotidiennes autorisées du document. Par la suite, la procédure pourra être répétée plusieurs fois jusqu'à ce que le nombre de terminaux (c'est-à-dire le nombre de consultations quotidiennes autorisées du document) soit nul. Alors, le serveur de contrôle bloque toute nouvelle demande d'autorisation adressée à lui sur cet identifiant unique, mettant fin à la consultation nomade du document en mode connecté, et connecté partiel.

Chaque ticket d'ouverture au délai 99999999 est enregistré sur un terminal supportant les prérequis, au choix de l'utilisateur. Ces terminaux équipés de la console seront désormais les seuls points où le document pourra être consulté. En effet, le chiffrement des éléments <p> se faisant avec une clé propre à chaque console sur un terminal donné, le document EPUB n'est plus transportable, il est « fixé ».

Un tel droit de consultation des documents peut avoir une durée de vie plus longue que les terminaux qui les supportent. Par exemple, si le document est autorisé à être restitué sur 3 terminaux, le client peut fixer ce document sur deux terminaux, son PC et son mobile téléphonique par exemple, et conserver le droit de le consulter en nomade puisqu'il lui reste un droit à fixer (une occurrence de lecture par jour). Quelques années plus tard, quand il changera de PC ou de mobile, il pourra demander une prolongation de son contrat, puisqu'il aura toujours le droit de se connecter au serveur de contrôle, et utiliser ce dernier droit pour fixer le document sur un nouvel équipement.

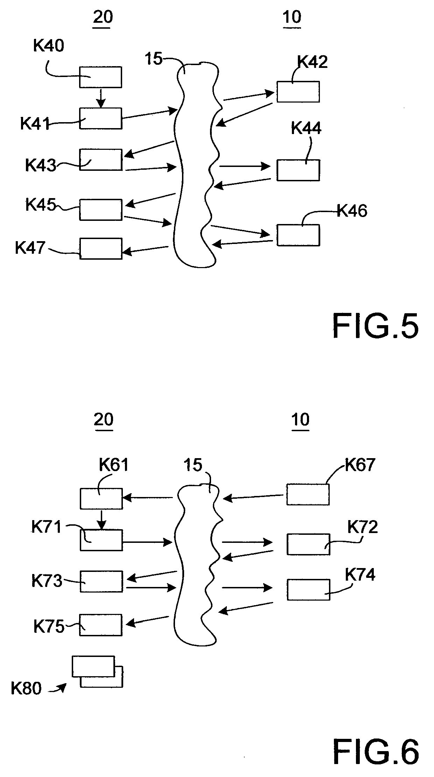

Les modes connecté et déconnecté d'un document sont schématisés à la figure 6 dont les différentes cases sont ci-dessous explicitées :

La case K67 indique l'envoi du ticket d'ouverture. La case K61 indique l'initialisation et le stockage du ticket d'ouverture dans la mémoire locale. La case K71 indique l'envoi de la demande d'autorisation du mode connecté total
La case K72 indique une réponse positive à la demande
La case K73 indique l' initialisation pour l'envoi au serveur de contrôle des paragraphes
La case K74 indique l'opération de déchiffrement des paragraphes renvoyés en clair
La case K75 indique le stockage des paragraphes dans la mémoire de masse cryptée locale.
La case K80 indique la restitution en local des paragraphes stockés dans la mémoire de masse cryptée locale.

### 7- Quatrième mode de réalisation « contenus embarqués » -FIG.5

Les contenus ne sont pas restitués en ligne, mais sont empaquetés dans un contenant , avec éventuellement des fichiers annexes, l'ensemble étant enregistré sur disque, CDROM, clé USB, etc.. Ils peuvent être conformes au format EPUB (voir le chapitre concernant le format EPUB), ou plus simplement comprendre au moins une page XHTML, le plugin qui contient le superviseur et le contenu, l'ensemble étant référencé comme objet dans la balise <OBJET> de la page. Il contient aussi l'identifiant unique et la requête d'initialisation/identification du document, par exemple dans les balises <META NAME = 'distribution' /> et <META NAME=' identifier-URL' />. Le superviseur agit suite à la réception de l'événement « load » par la fonction decode(identifiant_unique) comme dans le mode de réalisation 2.

La clé de contenu est emportée avec le document, cryptée par la clé serveur associée à l'identifiant unique.

t. Après une phase d'initialisation (case K40) figure 5, qui vérifie la signature du diffuseur, le plugin exécute la requête d'identification (case K41). En retour, le serveur de contrôle envoie le « ticket d'ouverture » (voir EPUB).

Si les droits en cours le permettent la clé de contenu est déchiffrée (K42), ce qui permet de déchiffrer « à la volée » et en mémoire volatile le contenu. Les cases (K43) (K44) (K45) sont les étapes de déchiffrement des paragraphes <p>, (K45) (K46) (K47) concernent le déchiffrement des contenus image ou multimédia.

Les contenus multimédias (case K47), par exemple « Chant_du_Départ.mp3 », sont restitués par un lecteur (player) inclus, qui accepte en entrée la chaîne en mémoire obtenue par l'appel d'une fonction, de type « restitue(Chant_du_Départ.mp3) » qui déchiffre le contenu « à la volée » en mémoire volatile avec la clé de contenu.

Si la clé de contenu est autorisée, par le ticket d'ouverture, à être stockée dans la mémoire permanente cryptée de la console, le contenu est restituable en mode déconnecté partiel, ou déconnecté définitif (voir la procédure à appliquer dans le chapitre sur le format EPUB).

Un tel document peut voyager sur tout type de support, CDROM, clés USB, réseaux, en un nombre illimité de copies, et être restitué sur toutes les plates-formes qui supportent la console widget et le player adéquat, tout en restant contraint par ses droits associés.

### 8- Exemple de réalisation

Dans une librairie en ligne, qui vend des ouvrages imprimés, on veut ajouter la vente d'ouvrages en téléchargement de tous types : livres, musique, vidéo, etc. Le procédé de diffusion décrit dans ce document le permet, et garantit aux éditeurs que les droits de propriété intellectuelle sont respectés.

La partie « chargement » des oeuvres comprend le transfert des oeuvres dans le magasin des documents de référence sur le serveur de livraison, puis le chiffrement et la référence des dites oeuvres, et l'exposition au public par le serveur de commande, où une « feuilleteuse » permet aux clients de découvrir tout ou partie de l'oeuvre pour une somme modique.

Pour acquérir, les clients accèdent aux publications depuis une console spécialisée s'il s'agit d'un document XHTML ou multimédia en téléchargement continu ou en streaming. Le serveur de livraison délivre un lien référençant le document chiffré à l'acquéreur, qui le sauvegarde, puis le restitue dans la console/widget.

S'il s'agit d'un livre « epub », ce livre sera téléchargé sur le terminal où le lecteur l'enregistre sous forme cryptée. Il est déchiffré par un processus exposé précédemment faisant intervenir la console et le serveur de contrôle.

Ces lectures ou rendus sont toujours opératoires en mode connecté, mais fonctionnent aussi en mode connecté partiel et déconnecté si le diffuseur les autorise.

Le diffuseur peut aussi envoyer les ouvrages au format PDF contrôlés par des scripts javascript, restituables dans la console.

L'éditeur peut également envoyer les contenus aux clients sur support physique (clé USB, CDROM, etc.).

Les documents PDF, XHTML, les livres epub traités par le procédé sont multicopiables, échangeables, sur toute plateforme supportant les prérequis, aux conditions exposées précédemment.

## Revendications

**1.** Procédé de diffusion contrôlée d'un document numérique qui ne contient pas d'éléments de programmation, encore appelé ci-après « document inerte », auquel sont associés des droits d'usage, le procédé comprenant :

  - une première étape dans laquelle un serveur de livraison (10A) référence le document inerte dans un document XHTML chargé à sa place de la gestion des droits d'usage, le document XHTML contenant des zones destinées à recevoir des éléments de personnalisation lors de sa diffusion, dont les éléments de personnalisation suivants:

    • un identifiant unique pointant sur les droits d'usage associés aux dits documents,
    • un lien vers le document inerte ,
    • un script de type javascript ou équivalent, ayant une fonction d'agent de supervision, constituant une partie dynamique du document XHTML, le script étant appelé suite à un événement de fin de chargement du document XHTML sur un terminal récepteur.

  et le cas échéant :

    • des informations complémentaires de publication et des commentaires.

  - chiffrer le document XHTML en chiffrant individuellement des contenus respectifs des propriétés innerHTML des objets HTML structurants du document XHTML, ces contenus étant chiffrés avec une clé générée par le serveur de livraison (K21),
  - chiffrer le document inerte avec une clé de contenu stockée sur un serveur de contrôle (10B) ou stockée cryptée par la clé générée par le serveur de livraison (10A) dans le document XHTML,
  - stocker le document inerte ainsi chiffré dans un magasin du serveur de livraison ou joindre ce document inerte au document XHTML,
  - publier le document XHTML en insérant un lien URL vers ce document dans une page HTML d'un serveur Web,
  - réceptionner une sélection du lien URL ainsi publié, cette sélection étant effectuée par un client,
  - télécharger le document XHTML sur un terminal récepteur du client, l'agent de supervision étant activé suite à un événement de fin de chargement du document XHTML sur le terminal récepteur du client,
  - déchiffrer le document XHTML par le serveur de contrôle (10B) lorsque les droits d'usage en cours le permettent, le déchiffrage étant obtenu par le script ayant la fonction d'agent de supervision par envoi au serveur de contrôle de l'identifiant unique du document XHTML, et successivement les contenus respectifs des propriétés innerHTML des objets HTML structurants, le serveur du contrôle effectuant le déchiffrement de ces contenus respectifs et les renvoyant en clair au script, obtenant ainsi le lien vers le document inerte,
  - obtenir le document numérique inerte,
  - déchiffrer le document inerte à l'aide de la clé de contenu,
  - transmettre le document inerte déchiffré au terminal récepteur du client si nécessaire.

**2.** Procédé de diffusion selon la revendication 1, dans lequel le document XHTML est chiffré par le serveur de livraison avec une clé symétrique, le document XHTML ainsi chiffré étant en outre codé en base64 pour supporter des échanges sur http et ses variantes.

**3.** Procédé de diffusion d'un document selon l'une des revendications 1 et 2, dans lequel le document inerte est lui-même livré joint au document XHTML, chiffré avec la clé de contenu par le serveur de livraison, la clé de contenu étant jointe chiffrée elle-même par la clé serveur ; pour chaque consultation, la clé de contenu chiffrée étant envoyée en fin de chargement du document XHTML par le script superviseur au serveur de contrôle par protocole AJAX ou équivalent, la clé de contenu étant retournée déchiffrée par le serveur de contrôle au script lorsque les droits d'usage en cours pour le document XHTML le permettent.

4. Procédé de diffusion selon l'une des revendications 1 à 3, comprenant une série d'étapes dite d'affectation, pour vérifier des données complémentaires requises par le document XHTML, par exemple pour affecter un client dûment identifié à un document XHTML, cette série d'étapes d'affectation consistant à :

introduire dans un environnement de contrôle du document XHTML des informations d'identification du client. ajouter au document XHTML des éléments permettant la présentation d'un formulaire de saisie des informations d'identification,
présenter au client le formulaire de saisie si une identification est requise et tant que des informations d'identification valides ne sont pas fournies.

5. Procédé de diffusion selon l'une des revendications 1 à 4 dans lequel le serveur de contrôle envoie une réponse à une demande de consultation émise par le document XHTML, la réponse consistant en un ticket d'ouverture récapitulant les droits en cours pour le document XHTML, ce ticket d'ouverture étant stocké sur le terminal récepteur dans une mémoire cryptée locale, lue par le script du document XHTML ayant la fonction d'agent de supervision lorsqu'il n'a pas la possibilité d'interroger le serveur de contrôle, le document XHTML étant déchiffré en fonction des droits en cours stockés dans le ticket d'ouverture et à partir d'un cache contenant en clair les contenus respectifs des propriétés innerHTML des objets XML structurants , ces contenus ayant été déchiffrés dans une session en ligne précédente avec le serveur de contrôle, ces droits en cours permettant la consultation du document XHTML, sans vérification par le serveur de contrôle, pendant une période fixée ou définitivement.

6. Procédé de diffusion selon la revendication 5, dans lequel le cache est lui-même stocké sur le terminal récepteur dans une mémoire cryptée permanente, attachée au terminal récepteur, autorisant une restitution du document XHTML selon les droits contenus dans le ticket d'ouverture.

7. Procédé de diffusion selon l'une des revendications 5 et 6, dans lequel le document XHTML fait partie d'une pluralité de pages XHTML élémentaires, avec ou sans images et contenus multimédias, formant un livre numérique au format epub et étant comprimées dans une archive, avec des informations complémentaires telles que l'auteur, l'éditeur, l'ISBN, etc. sous forme de metadatas XML, le procédé ajoutant aux dites metadatas un champ contenant une requête d'identification comprenant le lien vers le serveur de contrôle et un identifiant unique du livre numérique, le livre numérique étant restitué dans une console spécialisée (figure 8), les pages élémentaires XHTML étant chiffrées et déchiffrées selon la revendication 1, ainsi que les contenus images et multimédias, si les droits en cours l'y autorisent.

8. Procédé de diffusion selon l'une des revendications 1 à 7, dans lequel le document XHTML fait référence à un plugin programmable, par un identifiant unique, contenant et contrôlant le document inerte, et le restituant si les droits en cours l'y autorisent, le plugin comprenant le script ayant la fonction d'agent de supervision, le plugin étant en outre apte à construire dynamiquement une console de restitution propre au document inerte.

9. Système apte à mettre en oeuvre le procédé selon l'une des revendications 1 à 8.

10. Système selon la revendication 9, comprenant une console apte à vérifier l'intégrité et l'origine d'un document à restituer par une signature associée au document; la console ayant une identité et une indication d'origine vérifiables par le script ayant la fonction d'agent de supervision.

## Patentansprüche

1. Verfahren zur kontrollierten Verteilung eines digitalen Dokuments, das keine Programmierelemente beinhaltet, in der Folge auch als "passives Dokument" bezeichnet, und dem Nutzungsrechte zugeordnet sind, umfassend:

- einen ersten Schritt, in dem ein Auslieferungsserver (10A), das passive Dokument in ein XHTML Dokument verzeichnet, das anstelle des passiven Dokuments die Nutzungsrechte verwaltet, wobei das XHTML Dokument Bereiche beinhaltet, die dazu bestimmt sind, bei der Verteilung Personalisierungselemente aufzunehmen, darunter folgende Personalisierungselemente:

- Eine Benutzeridentifizierung, die auf Nutzungsrechte zuweisen, die den Dokumenten zugeordnet sind,
- Einen Link zum passiven Dokument,
- Ein Script, vom Typ Javascript oder einem gleichwertigen Typ, das die Funktion eines Überwachungsagenten erfüllt und einen dynamischen Teil des XHTML Dokuments darstellt, wobei das Script infolge einer Beendigung des Ladevorgangs des XHTML Dokuments auf ein Empfangsterminal gerufen wird,

und gegebenenfalls:

- Zusätzliche Veröffentlichungsinformationen und Kommentare.

- eine Verschlüsselung des XHTML Dokuments, bei der jeweilige Inhalte der innerHTML-Eigenschaften der strukturierenden HTML-Objekte des XHTML-Dokuments einzeln verschlüsselt werden, wobei diese Inhalte mit einem durch den Auslieferungsserver generierten Schlüssel (K21) verschlüsselt werden;
- eine Verschlüsselung des passiven Dokuments mit einem Inhaltsschlüssel, der auf einem Kontrollserver (10B) gespeichert ist oder im XHTML-Dokument, anhand des durch den Auslieferungsserver (10A) generierten Schlüssels verschlüsselt, gespeichert ist,
- eine Speicherung des derart verschlüsselten passiven Dokuments in einem Speicher des Auslieferungsservers oder ein Anhängen dieses passiven Dokuments an das XHTML-Dokument,
- eine Veröffentlichung des XHTML-Dokuments, indem ein URL-Link zu diesem Dokument in eine HTML-Seite eines Web-Servers eingefügt wird,
- einen Empfang einer Auswahl des derart veröffentlichten URL-Links durch einen Kunden,
- ein Herunterladen des XHTML-Dokuments auf ein Empfangsterminal des Kunden, wobei der Überwachungsagent infolge einer Beendigung des Ladevorgangs des XHTML-Dokuments auf den Empfangsterminal des Kunden gestartet wird,
- wenn es die gegenwärtigen Nutzungsrechte erlauben, eine Entschlüsselung des XHTML-Dokuments durch den Kontroll-Server (10B), wobei die Entschlüsselung durch das Script, das die Funktion des Überwachungsagenten erfüllt, erreicht wird, indem dem Kontroll-Server die Benutzeridentifizierung des XHTML-Dokuments, und nacheinander die jeweiligen Inhalte der innerHTML-Eigenschaften der strukturierenden HTML-Objekte zugeschickt werden, wobei der Kontroll-Server diese jeweiligen Inhalte entschlüsselt und sie unverschlüsselt dem Script zurückschickt, wodurch der Link zum passiven Dokument erlangt wird,
- ein Erlangen des passiven digitalen Dokuments,
- eine Entschlüsselung des passiven Dokuments anhand des Inhaltschlüssels,
- falls erforderlich, eine Übertragung des unverschlüsselten passiven Dokuments an den Empfangsterminal des Kunden.

2. Verteilungsverfahren nach Anspruch 1, bei dem das XHTML-Dokument durch den Auslieferungsserver anhand eines symmetrischen Schlüssels verschlüsselt wird, wobei das derart verschlüsselte XHTML-Dokument außerdem zum Austausch über HTTP und dessen Varianten im Base64-Verfahren kodiert ist.

3. Verteilungsverfahren eines Dokuments nach einem der Ansprüche 1 und 2, bei dem das passive Dokument selber, anhand des Inhaltsschlüssels durch den Auslieferungsserver verschlüsselt, als Anhang zum XHTML-Dokument geliefert wird, wobei der Inhaltsschlüssel selber durch den Schlüssel des Servers verschlüsselt beigefügt ist ; wobei bei jeder Abfrage der verschlüsselte Inhaltsschlüssel, am Ende des Ladevorgangs des XHTML-Dokuments, durch den Überwachungsagenten dem Kontroll-Server über das AJAX-Protokoll oder ein gleichwertiges Protokoll zugeschickt wird, wobei, wenn es die gegenwärtigen Nutzungsrechte des XHTML-Dokuments erlauben, der Inhaltsschlüssel entschlüsselt durch den Kontroll-Server an das Script zurückgeschickt wird.

4. Verteilungsverfahren nach einem der Ansprüche 1 bis 3, das eine Reihe von sogenannten Zuordnungsschritten umfasst, um vom XHTML-Dokument geforderte zusätzliche Daten zu prüfen, zum Beispiel, um einen ordnungsgemäß identifizierten Kunden einer XHTML-Datei zuzuordnen, wobei diese Reihe von Zuordnungsschritten darin besteht :

in eine Kontrollumgebung des XHTML-Dokuments Identifizierungsinformationen des Kunden einzugeben, dem XHTML-Dokument Elemente hinzuzufügen, die die Vorlage eines Formulars zur Eingabe der Identifizierungsinformationen erlauben,

dem Kunden das Eingabeformular vorzulegen, wenn eine Identifizierung erforderlich ist, und solange keine gültigen Identifizierungsinformationen vorgelegt werden.

**5.** Verteilungsverfahren nach einem der Ansprüche 1 bis 4, bei dem der Kontroll-Server eine Antwort auf eine vom XHTML-Dokument ausgegebene Abfrageanforderung sendet, wobei die Antwort aus einem Eröffnungsticket besteht, das die gegenwärtigen Nutzungsrechte für das XHTML-Dokument zusammenfasst, wobei dieses Eröffnungsticket auf dem Empfangsterminal in einem verschlüsselten lokalen Speicher gespeichert ist, vom Script des XHTML-Dokuments, das die Funktion eines Überwachungsagenten erfüllt, gelesen wird, wenn eine Abfrage des Kontroll-Servers nicht möglich ist, wobei das XHTML-Dokument in Abhängigkeit der im Eröffnungsticket gespeicherten gegenwärtigen Nutzungsrechte und aus einem Cache, der die unverschlüsselten jeweiligen Inhalte der innerHTML-Eigenschaften der strukturierenden XML-Objekte enthält, entschlüsselt wird, wobei diese Inhalte in einer vorherigen Online-Sitzung mit dem Kontroll-Server entschlüsselt wurden, wobei diese gegenwärtigen Rechte innerhalb eines bestimmten Zeitraums oder endgültig die Abfrage des XHTML-Dokuments ohne Prüfung durch den Kontroll-Server erlauben.

**6.** Verteilungsverfahren nach Anspruch 5, bei dem der Cache selber im Empfangsterminal in einem am Empfangsterminal befestigten permanenten verschlüsselten Speicher gespeichert ist, so dass eine Wiedergabe des XHTML-Dokuments in Abhängigkeit der im Eröffnungsticket enthaltenen Rechte erlaubt wird.

**7.** Verteilungsverfahren nach einem der Ansprüche 5 und 6, bei dem das XHTML-Dokument Teil einer Mehrzahl von elementaren XHTML-Seiten, mit oder ohne Bilder und Multimedia-Inhalte, ist, die ein digitales Buch im epub-Format bilden und zusammen mit ergänzenden Informationen, wie Autor, Verlag, ISBN, usw. in Form von XML-Metadaten, in einem Archiv komprimiert sind, wobei das Verfahren den Metadaten ein Feld hinzufügt, das eine Identifizierungsaufforderung beinhaltet, die den Link zum Kontroll-Server und eine eindeutige Kennung des digitalen Buchs beinhaltet, wobei das digitale Buch in einer spezialisierten Konsole (Figur 8) wiedergegeben wird, wobei, wenn es die gegenwärtigen Rechte erlauben, die elementaren XHTML-Seiten, sowie die Bild- und Multimedia-Inhalte, nach Anspruch 1 verschlüsselt und entschlüsselt werden.

**8.** Verteilungsverfahren nach einem der Ansprüche 1 bis 7, bei dem das XHTML-Dokument über eine eindeutige Kennung auf ein programmierbares Plugin verweist, das das passive Dokument enthält und kontrolliert, und es, wenn es die gegenwärtigen Nutzungsrechte erlauben, wiedergibt, wobei das Plugin das Script, das die Funktion eines Überwachungsagenten erfüllt, umfasst, und wobei das Plugin außerdem fähig ist, eine dem passiven Dokumente eigene Wiedergabe-Konsole dynamisch zu erstellen.

**9.** System, welches fähig ist, das Verfahren nach einem der Ansprüche 1 bis 8 auszuführen.

**10.** System nach Anspruch 9, umfassend eine Konsole, die fähig ist, die Integrität und den Ursprung eines zu wiedergebenden Dokuments anhand einer dem Dokument beigefügten Signatur zu prüfen; wobei die Konsole eine Identität und eine Ursprungsangabe aufweist, die durch das Script, das die Funktion eines Überwachungsagenten erfüllt, überprüfbar sind.

**Claims**

**1.** A method for controlled distribution of a digital document that contains no programming elements, also referred to hereinafter as an "inert document", to which use rights are associated, the method comprising:

- a first step in which a delivery server (10A) references the inert document in an XHTML document, this XHTML document being in charge of the use rights in place of the inert document, the XHTML document containing fields intended to receive customisation elements during its distribution, including the following customisation elements:

• a unique identifier pointing to the use rights associated with said documents,
• a link to the inert document,
• a script of type JavaScript or equivalent, acting as supervisory agent, forming a dynamic part of the XHTML document, the script being called following an event of end of loading the XHTML document on a receiver terminal.

and where applicable:

• additional publication information and comments.

- encrypting the XHTML document by individually encrypting respective contents of the innerHTML properties of the HTML objects structuring the XHTML document, these contents being encrypted with a key generated by the delivery server (K21),
- encrypting the inert document with a content key stored on a control server (10B) or stored encrypted by the key generated by the delivery server (10A) in the XHTML document,
- storing the inert document thus encrypted in a store of the delivery server or attaching this inert document to the XHTML document,
- publishing the XHTML document by inserting a URL to this document in an HTML page of a web server,
- receiving a selection of the URL thus published, this selection being carried out by a customer,
- downloading the XHTML document on a receiver terminal of the customer, the supervisory agent being activated following an event of end of loading of the XHTML document on the receiver terminal of the customer,
- decrypting the XHTML document by the control server (10B) when allowed by the current use rights, decryption being obtained by the script acting as supervisory agent by sending to the control server the unique identifier of the XHTML document, and successively the respective contents of the innerHTML properties of the structuring HTML objects, the control server decrypting these respective contents and returning these unencrypted to the script, thus obtaining the link to the inert document,
- obtaining the inert digital document,
- decrypting the inert document using the content key,
- transmitting the decrypted inert document to the receiver terminal of the customer if necessary.

**2.** A distribution method according to claim 1, wherein the XHTML document is encrypted by the delivery server with a symmetric key, the XHTML document thus encrypted being further encoded in base64 to support exchanges on http and its variants.

**3.** A method for distributing a document according to one of claims 1 and 2, wherein the inert document is itself delivered attached to the XHTML document, encrypted with the content key by the delivery server, the content key being attached itself encrypted by the server key; for each consultation, the encrypted content key being sent at end of loading of the XHTML document by the supervisory script to the control server by AJAX protocol or equivalent, the content key being returned decrypted by the control server to the script when allowed by the current use rights for the XHTML document.

**4.** A distribution method according to one of claims 1 to 3, comprising a series of steps called "assignment" steps, to check additional data required by the XHTML document, for example to assign a duly identified customer to an XHTML document, this series of assignment steps consisting in:

introducing customer identification information in a control environment of the XHTML document,
adding to the XHTML document elements used to present an identification information input form,
presenting the input form to the customer if an identification is required and as long as valid identification information is not supplied.

**5.** A distribution method according to one of claims 1 to 4, wherein the control server sends a response to a consultation request sent by the XHTML document, the response consisting of an opening ticket summarising the current rights for the XHTML document, this opening ticket being stored on the receiver terminal in a local encrypted memory, read by the script of the XHTML document acting as supervisory agent when it cannot query the control server, the XHTML document being decrypted according to the current rights stored in the opening ticket and from a cache containing the respective unencrypted contents of the innerHTML properties of the structuring XML objects, these contents having been decrypted in a previous online session with the control server, these current rights allowing consultation of the XHTML document, without verification by the control server, for a fixed period or permanently.

**6.** A distribution method according to claim 5, wherein the cache is itself stored on the receiver terminal in a permanent encrypted memory, attached to the receiver terminal, allowing restoration of the XHTML document according to the rights contained in the opening ticket.

**7.** A distribution method according to one of claims 5 and 6, wherein the XHTML document is part of a plurality of elementary XHTML pages, with or without images and multimedia contents, forming a digital book in epub format and being compressed in an archive, with additional information such as the author, publisher, ISBN, etc. as XML metadata, the method adding to said metadata a field containing an identification query including the link to the control server and a unique identifier of the digital book, the digital book being restored in a specialised console (Figure 8), the elementary XHTML pages being encrypted and decrypted according to claim 1, as well as the image and multimedia contents, if allowed by the current rights.

8. A distribution method according to one of claims 1 to 7, wherein the XHTML document refers to a programmable plugin, by a unique identifier, containing and checking the inert document, and restoring it if allowed by the current rights, the plugin comprising the script acting as supervisory agent, the plugin being further able to dynamically build a restoration console specific to the inert document.

9. A system adapted to implement the method according to one of claims 1 to 8.

10. A system according to claim 9, comprising a console capable of checking the integrity and origin of a document to be restored by a signature associated with the document; the console having an identity and an indication of origin that can be checked by the script acting as supervisory agent.

10A

10B

221
241

251

231

21

50

242

25

252

FIG. 1

50

Z1

Z2

Z3

Z4

FIG.2

FIG. 3

20                    10

15

K10

K1

K2

K3

10A

10C

K20

K21

K22

K24

10A          K23

K25

K26

10B          K27

K28

K31

K29

K30

K31

# FIG.4

20       10

K40

15

K42

K41

K44

K43

K45

K46

K47

# FIG.5

20       10

K61   15   K67

K71

K72

K73

K74

K75

K80

# FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007135281 A

- FR 2929024